# FASCICULE DE BREVET EUROPEEN

(11) **EP 4 072 869 B1**
(45) Date de publication et mention de la délivrance du brevet: **31.01.2024**
(21) Numéro de dépôt: 20820187.1
(22) Date de dépôt: 10.12.2020
(51) Int. Cl.: B60B 21/02, B60B 21/12, B60B 25/00, B60C 29/02

(54) **ROUE COMPRENANT UN CANAL INTERNE DE GONFLAGE, TRAIN D'ATTERRISSAGE ET AERONEF COMPORTANT UNE TELLE ROUE**
RAD MIT INTERNEM AUFBLASKANAL, FAHRWERK UND FLUGZEUG MIT EINEM SOLCHEN RAD
WHEEL WITH AN INTERNAL INFLATING CHANNEL, LANDING GEAR AND AIRPLANE WITH SUCH A WHEEL

(30) Priorité: 10.12.2019 FR 1914078
(43) Date de publication de la demande: 19.10.2022
(73) Titulaire: Safran Landing Systems, 78140 Vélizy-Villacoublay (FR)
(72) Inventeur: MOLINE, Sylvain, 77550 MOISSY-CRAMAYEL (FR); TARNOWSKI, Yannick, 77550 MOISSY-CRAMAYEL (FR)
(74) Mandataire: Lavialle, Bruno François Stéphane
(86) Numéro de dépôt international: PCT/EP2020/085461
(87) Numéro de publication internationale: WO 2021/116261

(56) Documents cités:
- CN-U- 201 446 845
- DE-A1- 4 103 644
- DE-A1- 4 445 267
- DE-A1- 10 343 598
- GB-A- 892 331
- US-A1- 2011 221 261

## Description

La présente invention concerne une roue comprenant une jante dans laquelle est organisé un canal de gonflage.

La roue est destinée à équiper un véhicule tel qu'un aéronef.

Une roue du type mentionnée est connue dans DE 10343598 A1.

### ARRIERE PLAN DE L'INVENTION

Une roue comprend généralement un moyeu central définissant un axe de rotation de la roue et une jante qui est coaxiale au moyeu central et qui est reliée au moyeu central par un voile. La jante est pourvue de rebords annulaires en saillie vers l'extérieur de la roue pour recevoir entre eux un pneumatique définissant avec la jante un volume pour accueillir un gaz de gonflage.

On connaît des roues d'aéronefs dont la jante comporte généralement une demi-jante intérieure et une demi-jante extérieure dont les voiles sont assemblés l'un à l'autre au moyen de boulons répartis régulièrement. La demi-jante intérieure comprend usuellement un logement dans lequel est agencé un joint d'étanchéité qui se trouve écrasé entre les deux demi-jantes pour assurer l'étanchéité du volume délimité par la jante et le pneumatique.

Les roues d'aéronefs sont par ailleurs dotées d'une valve de gonflage en communication avec le volume délimité par la jante et le pneumatique pour permettre de contrôler et d'ajuster la pression du gaz de gonflage du pneumatique. La valve est généralement solidaire de la demi-jante extérieure, c'est-à-dire du côté libre de la roue, pour faciliter les opérations de gonflage. La valve s'étend plus précisément en saillie axiale du voile de la demi-jante extérieure dans le volume défini par la partie annulaire de la jante qui protège ladite valve des chocs et vis-à-vis du flux d'air engendré par le roulage.

Dans le domaine de l'aviation, il est désormais prévu d'équiper les aéronefs d'organes d'entraînement en rotation des roues pour permettre le déplacement au sol de l'aéronef sans utiliser ses groupes motopropulseurs, notamment afin de réduire l'empreinte environnementale. L'équipement d'une roue avec un moteur alors que celle-ci est déjà équipée d'un frein se révèle techniquement difficile, notamment pour des questions d'encombrement et de refroidissement du frein après un freinage. En particulier, la demi-jante intérieure de la roue est déjà passablement remplie par des disques du frein et il y a très peu de place pour disposer un moteur et son dispositif d'accouplement dans l'espace disponible à proximité immédiate de la roue.

Aussi, a-t-il été envisagé d'implanter les organes d'entraînement dans la demi-jante extérieure. Néanmoins, la présence de la valve au niveau du voile complexifie grandement une telle implantation, l'accès à ladite valve s'avérant incontournable pour le gonflage et le contrôle de la pression du pneumatique.

### OBJET DE L'INVENTION

L'invention a donc pour objet de proposer une roue d'aéronef permettant d'obvier au moins en partie aux problèmes précités.

### RESUME DE L'INVENTION

A cet effet, l'invention propose une roue de véhicule comprenant une jante centrée sur un axe de rotation de la roue et sur laquelle sont montés un pneumatique et une valve de gonflage du pneumatique. Le pneumatique est chaussé entre des rebords solidaires de la jante pour définir avec la jante un volume relié à l'extérieur par un canal de gonflage.

Selon l'invention, le canal de gonflage s'étend dans la jante en ayant une première extrémité débouchant dans le volume et une deuxième extrémité qui débouche à l'extérieur du volume au voisinage d'un des rebords et qui est pourvue de la valve de gonflage.

Ainsi, la valve est déportée au voisinage de la jonction du rebord et de la jante, libérant le volume délimité par la jante à l'opposé du pneumatique.

Selon une caractéristique particulière de l'invention, le canal s'étend sensiblement parallèlement à l'axe de rotation de la roue.

De manière particulière, la jante comprend un bossage de forme sensiblement rectiligne s'étendant axialement d'un voile solidaire de la jante vers le rebord de la jante au voisinage duquel s'étend la valve de gonflage, le canal de gonflage s'étendant au moins en partie dans le bossage.

De manière particulière, le bossage comprend une surface d'accueil de la valve de gonflage, la surface d'accueil prolongeant le rebord au voisinage duquel s'étend la valve de gonflage.

De manière particulière, la valve de gonflage est inclinée vers l'extérieur par rapport à l'axe de rotation de la roue.

Selon une autre caractéristique particulière, la jante comprend deux demi-jantes comportant chacune une portion de jante annulaire, un voile et un demi-moyeu agencé pour être reçu à pivotement sur un essieu.

De manière particulière, le canal de gonflage s'étend exclusivement à travers l'une des deux demi-jantes.

Selon une autre caractéristique particulière, un anneau de protection est fixé coaxialement à la jante via des moyens de fixation (13, 25), l'anneau de protection étant agencé de façon à ce que la valve de gonflage s'étende à l'intérieur d'un volume délimité par la jante et ledit anneau.

De manière particulière, les moyens de fixations comprennent des oreilles s'étendant en saillie axiale d'une périphérie de la jante, l'anneau de protection étant boulonné aux oreilles.

De manière particulière, l'anneau de protection comporte plusieurs parties en forme générale d'arc de cercle.

De manière particulière, l'anneau de protection est détouré au niveau de la valve de gonflage.

L'invention concerne également un train d'atterrissage d'aéronef comprenant une telle roue.

L'invention concerne en outre un aéronef comprenant un tel train d'atterrissage.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig.1] la figure 1 est une vue en coupe axiale d'une roue freinée d'aéronef selon un mode de réalisation particulier de l'invention ;
[Fig.2] la figure 2 est une vue en perspective d'une partie de la roue d'aéronef illustrée à la figure 1, montrant l'agencement de la valve de gonflage ;
[Fig.3] la figure 3 est une vue de face d'une variante de la roue d'aéronef illustrée à la figure 1, montrant l'agencement des moyens de fixation d'un anneau de protection ;
[Fig.4] la figure 4 est une vue en perspective d'une partie de la roue d'aéronef illustrée à la figure 3, montrant la forme de l'anneau de protection au voisinage de la valve de gonflage ;
[Fig.5] la figure 5 est une vue en coupe axiale selon le plan IV-IV d'une partie la roue d'aéronef, montrant le profil de l'anneau de protection.

### DESCRIPTION DETAILLEE DE L'INVENTION

La roue est ici décrite en application à une roue d'aéronef destinée à équiper l'extrémité inférieure d'un atterrisseur d'un train d'atterrissage d'aéronef.

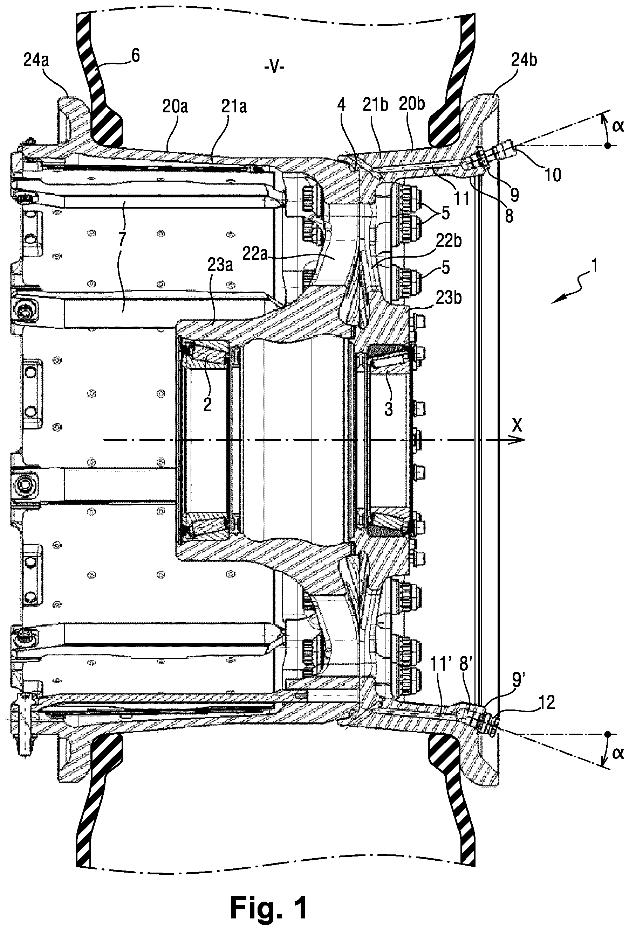

En référence à la figure 1, une roue 1 d'aéronef comprend, selon un mode de réalisation particulier de l'invention, deux demi-roues 20a, 20b qui comportent chacune une jante 21a, 21b annulaire reliée par un voile 22a, 22b à un demi-moyeu 23a, 23b reçu à pivotement sur un essieu au moyen d'un roulement 2, 3. La demi-roue 20a comporte un logement ménagé sur un bord de la jante 21a et dans lequel est agencé un joint d'étanchéité 4 pour que celui-ci soit élastiquement comprimé entre les demi-roues 20a, 20b une fois celles-ci assemblées.

Les demi-roues 20a, 20b sont rapprochées suivant une direction parallèle à un axe de rotation X de la roue 1 et comportent des portées de centrage pour assurer le bon positionnement relatif des demi-roues 20a, 20b. Les demi-roues 20a, 20b sont maintenues en position par des boulons 5 d'assemblage agencés dans des orifices percés en regard dans les voiles 22a, 22b.

De façon connue en soi, les boulons 5 sont vissés et serrés pour assembler les demi-roues 20a, 20b après montage d'un pneumatique 6 sur les jantes 21a, 21b. Dans cette position, le joint d'étanchéité 4 est élastiquement comprimé entre les demi-roues 20a, 20b et empêche ainsi le gaz contenu dans un volume V délimité par le pneumatique 6 et les demi-roues 20a, 20b de s'échapper vers l'extérieur de la roue 1.

Chacune des demi-roues 20a, 20b comporte un rebord 24a, 24b annulaire agencé à une extrémité distale de la jante 21a, 21b et s'étendant en saillie radiale vers l'extérieur de la roue 1. Les rebords 24a, 24b de jante forment des butées radiales empêchant le pneumatique 6 de déjanter.

Une surface intérieure de la jante 21a s'étend en regard d'une surface extérieure du demi-moyeu 23a et délimite avec cette dernière et le voile 22a un espace de réception d'un empilement de disques de frein (non représenté ici). L'empilement comprend des disques stators fixes en rotation par rapport à l'essieu et des disques rotors comportant des encoches périphériques recevant des barrettes, généralement désignées en 7, fixées sur la surface intérieure de la jante 21a. Chaque barrette 7 s'étend selon un axe parallèle à l'axe de rotation X de la roue 1.

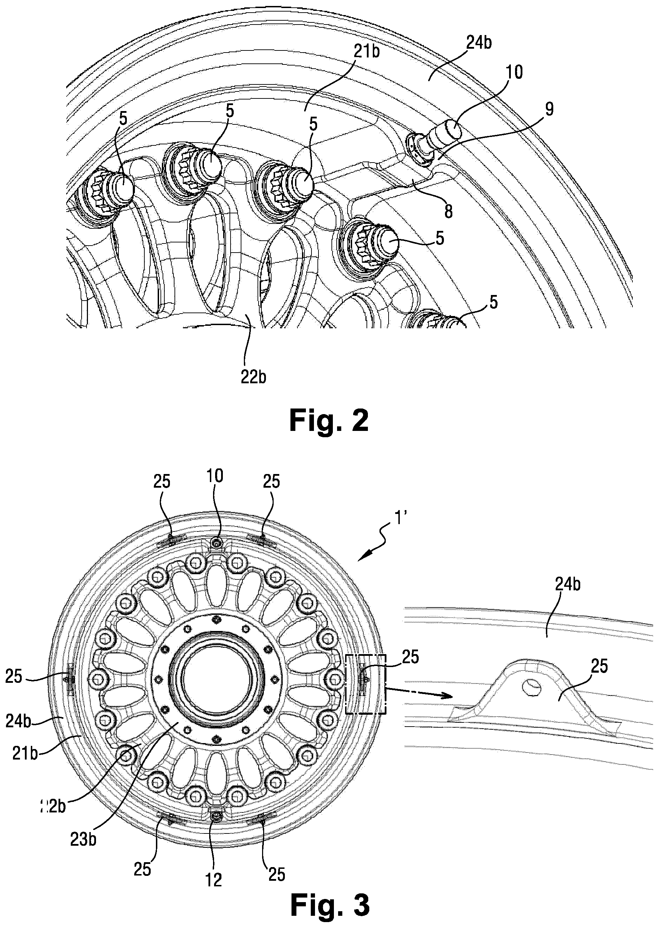

Comme illustré à la figure 2, la jante 21b a une surface intérieure pourvue d'un premier bossage 8 de forme sensiblement rectiligne qui s'étend axialement du voile 22b vers l'extrémité distale de ladite jante 21b au niveau de laquelle le bossage se termine par une surface 9 s'étendant dans le prolongement du rebord 24b.

Un canal 11 de gonflage s'étend dans le bossage 8, dans un plan passant par l'axe de rotation X de la roue 1 et partageant ledit bossage 8 en deux parties égales, et débouche dans le volume V au niveau d'une extrémité proximale de la jante 21b, au voisinage du voile 22b. Le canal 11 est ici réalisé par deux perçages débouchant l'un dans l'autre, l'un étant réalisé depuis la surface extérieure de la jante 21b pour former une première extrémité du canal 11 débouchant dans le volume V et l'autre depuis la surface 9 du bossage 8 pour former une deuxième extrémité du canal 11.

La deuxième extrémité du canal 11 comporte un alésage dans lequel est fixée une valve 10 de gonflage s'étendant en saillie de la surface 9 du bossage 8. La valve 10 permet d'introduire du gaz sous pression dans le volume V délimité par le pneumatique 6 et les jantes 21a, 21b.

Un tel agencement de la valve 10 sur l'extérieur de la demi-roue 20b, et en particulier à proximité du rebord 24b de jante, permet l'implantation d'organes d'entraînement de la roue 1 à l'intérieur de la demi-roue 20b tout en assurant l'accès à la valve 10 par l'opérateur.

De manière similaire, la portion de jante 21b comprend, en une position diamétralement opposée à celle du premier bossage 8 un deuxième bossage 8' sensiblement identique au premier bossage 8. Le bossage 8' est ainsi de forme rectiligne et s'étend axialement du voile 22b vers l'extrémité distale de ladite portion de jante 21b, de manière à former une deuxième surface 9' prolongeant localement le rebord 24b de jante.

La surface 9' comporte un alésage dans lequel est fixé un clapet de surpression 12. L'alésage est prolongé par un canal 11' identique au canal 11 permettant de laisser s'échapper le gaz sous pression contenu dans le volume V. De manière identique au canal 11, le canal 11' s'étend à travers le bossage 8', dans un plan passant par l'axe de rotation X de la roue 1 et partageant ledit bossage 8' en deux parties égales, et débouche dans le volume V au niveau d'une extrémité proximale de la jante 21b, au voisinage de la jante 21b. Le canal 11' est réalisé par deux perçages débouchant l'un dans l'autre, l'un étant réalisé depuis la surface extérieure de la jante 21b et l'autre depuis la surface 9' en saillie de laquelle s'étend le clapet de surpression 12.

Pour des raisons d'équilibrage de la roue 1, les bossages 8, 8'sont symétriquement répartis autour de l'axe de rotation X de la roue 1. Ainsi, les canaux 11, 11' s'étendent dans un même plan passant par l'axe de rotation X qui est ici celui de la figure 1.

On notera que la valve 10 et le clapet de surpression 12 forment un angle α non nul avec l'axe de rotation X de la roue 1. L'angle α est ici environ égal à 30 degrés et permet de faciliter l'accès à la valve 10 et au clapet de surpression 12 par l'opérateur, notamment en présence d'organes d'entraînement.

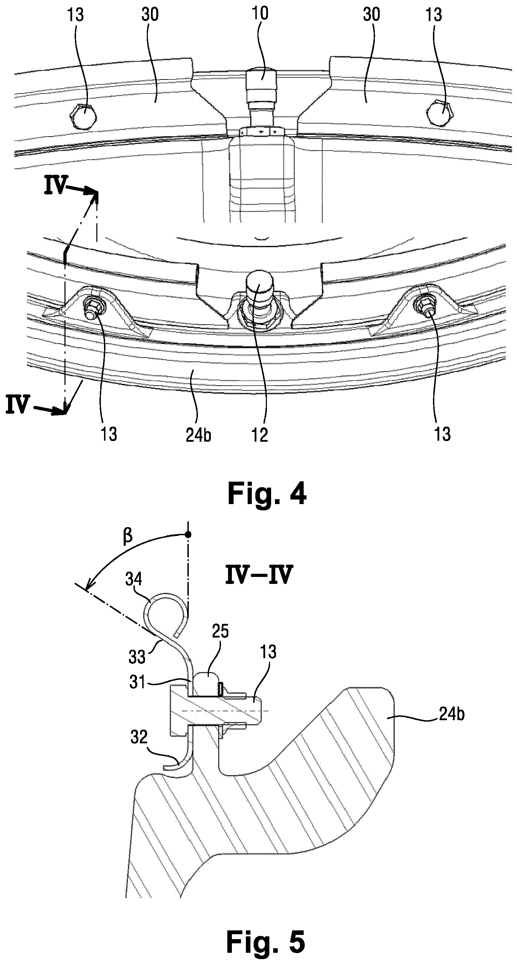

Les figures 3 et 4 illustrent une roue 1' d'aéronef qui n'est autre qu'une variante de la roue 1 d'aéronef illustré à la figure 1.

La roue 1' diffère de la roue 1 en ce qu'elle comprend un anneau de protection 30 en métal s'étendant coaxialement aux demi-roues 20a, 20b pour protéger la valve 10 et le clapet de surpression 12. L'anneau de protection 30 comporte deux parties sensiblement identiques en forme générale de demi-cercle, s'étendant de part et d'autre de la valve 10 et du clapet de surpression 12.

Conformément à la figure 5, chacune des parties de l'anneau de protection 30 comporte une portion semi-tubulaire 31 prolongée d'un côté par une portion incurvée 32 intérieurement, et de l'autre côté par une portion semi-tronconique 33 se terminant par un bourrelet 34.

La portion semi-tubulaire 31 comprend à ses extrémités et en son milieu un orifice permettant sa fixation à des oreilles 25 s'étendant en saillie axiale du rebord 24b de la demi-jante 20b, aux moyens de boulons 13. On distingue ainsi six oreilles 25 dont quatre sont disposés de part et d'autre de la valve 10 et du clapet de surpression 12, les deux autres permettant de limiter la déflexion de l'anneau de protection 30.

La portion incurvée 32 est agencée de façon à être au plus près de la demi-jante 20b sans la toucher afin de limiter les perturbations de flux d'air et ne pas endommager ladite demi-jante 20b lors du roulage.

La portion semi-tronconique 33 s'étend vers l'intérieur de la roue 1' et forme avec l'axe de rotation X un angle β ici sensiblement proche de 60 degrés. La longueur de la portion semi-tronconique 33 peut par exemple dépendre du volume d'air que l'on souhaite laisser passer entre la roue 1' et les organes d'entraînement de ladite roue 1'.

L'anneau de protection 30 permet ainsi à la fois de protéger la valve 10 et le clapet de surpression 12 des agressions extérieures et de réguler le flux d'air, et ainsi limiter les perturbations du flux d'air créé lors du roulage.

Le bourrelet 34 est ici de forme arrondie, ce qui permet d'une part de rigidifier l'anneau 30, et d'autre part d'éviter tout agression envers les pièces environnantes et l'opérateur.

Chacune des extrémités des parties de l'anneau 30 sont biseautées de façon à former ici un détourage de la valve 10 et du clapet de surpression 12 pour en faciliter l'accès.

De par son mode de fixation au moyen de boulons 13, l'anneau de protection 30 est facilement démontable. Il peut donc être rapidement remplacé par un autre anneau de protection de forme différente pour par exemple ajuster le flux d'air ou encore s'adapter à des dimensions de valve et de clapet de surpression différentes.

Bien entendu, l'invention n'est pas limitée aux modes de réalisation décrits mais englobe toute variante entrant dans le champ de l'invention telle que définie par les revendications.

La roue peut être en une ou plusieurs pièces.

Le nombre de bossages peut être égal à un ou supérieur à deux.

L'angle α d'inclinaison de la valve 10 et/ou du clapet de surpression 12 peut être inférieur ou supérieur à 30 degrés, voire nul.

Bien que l'anneau de protection soit ici en métal, d'autres matériaux peuvent être envisagés (plastique...).

La forme et les dimensions de l'anneau de protection peut être différente.

L'anneau de protection peut être en une seule partie comme en une pluralité de parties.

Le nombre des oreilles permettant la fixation de l'anneau de protection sur la demi-jante peut être différent.

D'autres moyens de fixation de l'anneau de protection sur la demi-jante peuvent être envisagés (clipsage, vissage...) .

L'angle β formé par la portion tronconique de l'anneau de protection d'inclinaison et l'axe de rotation X de la roue 1' peut être inférieur ou supérieur à 60 degrés, voire nul.

La roue de l'invention est ici décrite en application à un train d'atterrissage d'aéronef. Bien entendu, elle est utilisable pour d'autres types de véhicules et par exemple des véhicules terrestres.

## Revendications

1. Roue (1, 1') de véhicule, comprenant une jante (20a, 20b) centrée sur un axe de rotation (X) de la roue et sur laquelle sont montés un pneumatique (6) et une valve de gonflage (10) du pneumatique, le pneumatique (6) étant chaussé entre des rebords solidaires de la jante pour définir avec la jante un volume (V) relié à l'extérieur par un canal de gonflage (11) qui s'étend dans la jante en ayant une première extrémité débouchant dans le volume et une deuxième extrémité qui débouche à l'extérieur du volume (V) au voisinage d'un des rebords (24b) et qui est pourvue de la valve de gonflage (10), la roue étant **caractérisée en ce que** la jante (20b) comprend un bossage (8) de forme sensiblement rectiligne s'étendant axialement d'un voile (22b) solidaire de la jante vers le rebord (24b) de la jante au voisinage duquel s'étend la valve de gonflage (10), le canal de gonflage (11) s'étendant au moins en partie dans le bossage (8).

2. Roue (1, 1') selon la revendication 1, dans laquelle le canal s'étend sensiblement parallèlement à l'axe de rotation (X) de la roue.

3. Roue (1, 1') selon l'une quelconque des revendications précédentes, dans laquelle le bossage (8) comprend une surface d'accueil (9) de la valve de gonflage (10), la surface d'accueil prolongeant le rebord (24b) au voisinage duquel s'étend la valve de gonflage.

4. Roue (1, 1') selon l'une quelconque des revendications précédentes, dans laquelle la valve de gonflage (10) est inclinée vers l'extérieur par rapport à l'axe de rotation (X) de la roue.

5. Roue (1, 1') selon l'une quelconque des revendications précédentes, dans laquelle la jante comprend deux demi-jantes (20a, 20b) comportant chacune une portion de jante (21a, 21b) annulaire, un voile (22a, 22b) et un demi-moyeu (23a, 23b) agencé pour être reçu à pivotement sur un essieu.

6. Roue (1, 1') selon la revendication 5, dans laquelle le canal de gonflage (11) s'étend exclusivement à travers l'une des deux demi-jantes (20b).

7. Roue (1') selon l'une quelconque des revendications précédentes, comprenant un anneau de protection (30) fixé coaxialement à la jante via des moyens de fixation (13, 25), l'anneau de protection étant agencé de façon à ce que la valve de gonflage (10) s'étende à l'intérieur d'un volume délimité par la jante et ledit anneau.

8. Roue (1') selon la revendication 7, dans laquelle les moyens de fixations comprennent des oreilles (25) s'étendant en saillie axiale d'une périphérie de la jante, l'anneau de protection étant boulonné aux oreilles.

9. Roue (1') selon la revendication 7 ou 8, dans laquelle l'anneau de protection (30) comporte plusieurs parties en forme générale d'arc de cercle.

10. Roue (1') selon l'une quelconque des revendications 7 à 9, dans laquelle l'anneau de protection (30) est détouré au niveau de la valve de gonflage (10).

11. Train d'atterrissage d'aéronef comprenant au moins une roue (1, 1') selon l'une quelconque des revendications précédentes.

12. Aéronef comprenant au moins un train d'atterrissage selon la revendication 11.

## Patentansprüche

1. Fahrzeugrad (1, 1'), umfassend eine Felge (20a, 20b), die auf einer Rotationsachse (X) des Rades zentriert ist und auf der ein Reifen (6) und ein Aufblasventil (10) für den Reifen montiert sind, wobei der Reifen (6) zwischen fest mit der Felge verbundenen Rändern aufgezogen ist, um mit der Felge ein Volumen (V) zu definieren, das mit dem Äußeren über einen Aufblaskanal (11) verbunden ist, der sich in der Felge erstreckt, indem er ein erstes Ende hat, das in das Volumen mündet, und ein zweites Ende, das außerhalb des Volumens (V) in der Nähe eines der Ränder (24b) mündet und das mit dem Aufblasventil (10) versehen ist, wobei das Rad **dadurch gekennzeichnet ist, dass** die Felge (20b) einen Vorsprung (8) in einer im Wesentlichen geradlinigen Form umfasst, der sich axial von einer fest mit der Felge verbundenen Radscheibe (22b) zu dem Rand (24b) der Felge erstreckt, in dessen Nähe sich das Aufblasventil (10) erstreckt, wobei sich der Aufblaskanal (11) zumindest teilweise in dem Vorsprung (8) erstreckt.

2. Rad (1, 1') nach Anspruch 1, bei dem sich der Kanal im Wesentlichen parallel zur Rotationsachse (X) des Rades erstreckt.

3. Rad (1, 1') nach einem der vorhergehenden Ansprüche, bei dem der Vorsprung (8) eine Aufnahmefläche (9) zur Aufnahme des Aufblasventils (10) umfasst, wobei die Aufnahmefläche den Rand (24b) verlängert, in dessen Nähe sich das Aufblasventil erstreckt.

4. Rad (1, 1') nach einem der vorhergehenden Ansprüche, bei dem das Aufblasventil (10) in Bezug auf die Rotationsachse (X) des Rades nach außen geneigt ist.

5. Rad (1, 1') nach einem der vorhergehenden Ansprüche, bei dem die Felge zwei Halbfelgen (20a, 20b) umfasst, die jeweils einen ringförmigen Felgenabschnitt (21a, 21b), eine Radscheibe (22a, 22b) und eine Halbnabe (23a, 23b) umfassen, die ausgebildet ist, drehbar auf einer Radachse aufgenommen zu werden.

6. Rad (1, 1') nach Anspruch 5, bei dem sich der Aufblaskanal (11) ausschließlich durch eine der beiden Halbfelgen (20b) erstreckt.

7. Rad (1') nach einem der vorhergehenden Ansprüche, umfassend einen Schutzring (30), der koaxial an der Felge über Befestigungsmittel (13, 25) befestigt ist, wobei der Schutzring derart ausgebildet ist, dass sich das Aufblasventil (10) im Inneren eines Volumens erstreckt, das von der Felge und dem genannten Ring begrenzt ist.

8. Rad (1') nach Anspruch 7, bei dem die Befestigungsmittel Ohren (25) umfassen, die von einem Umfang der Felge axial vorstehen, wobei der Schutzring an den Ohren angeschraubt ist.

9. Rad (1') nach Anspruch 7 oder 8, bei dem der Schutzring (30) mehrere Teile in der allgemeinen Form eines Kreisbogens umfasst.

10. Rad (1') nach einem der Ansprüche 7 bis 9, bei dem der Schutzring (30) im Bereich des Aufblasventils (10) ausgespart ist.

11. Luftfahrzeugfahrwerk, umfassend mindestens ein Rad (1, 1') nach einem der vorhergehenden Ansprüche.

12. Luftfahrzeug, umfassend mindestens ein Fahrwerk nach Anspruch 11.

## Claims

1. A vehicle wheel (1, 1') comprising a rim (20a, 20b) centered on an axis of rotation (X) of the wheel and having mounted thereon a tire (6) and an inflation valve (10) for the tire, the tire (6) being engaged between flanges secured to the rim so as to co-operate with the rim to define a volume (V) connected to the outside by an inflation channel (11) that extends in the rim, having a first end opening out into the volume and a second end opening to the outside of the volume (V) in the vicinity of one of the flanges (24b) and that is provided with the inflation valve (10), the wheel being **characterized in that** the rim (20b) includes a boss (8) of substantially rectilinear shape extending axially from a web (22b) secured to the rim towards the flange (24b) of the rim that has the inflation valve (10) extending in its vicinity, the inflation channel (11) extending at least in part inside the boss (8).

2. A wheel (1, 1') according to claim 1, wherein the channel extends substantially parallel to the axis of rotation (X) of the wheel.

3. A wheel (1, 1') according to either preceding claim, wherein the boss (8) includes a reception surface (9) for receiving the inflation valve (10), the reception surface running on from the flange (24b) that has the inflation valve extending in its vicinity.

4. A wheel (1, 1') according to any preceding claim, wherein the inflation valve (10) is outwardly inclined relative to the axis of rotation (X) of the wheel.

5. A wheel (1, 1') according to any preceding claim, wherein the rim comprises two half-rims (20a, 20b), each comprising a respective annular rim portion (21a, 21b), a respective web (22a, 22b), and a respective half-hub (23a, 23b) arranged to be rotatably received on an axle.

6. A wheel (1, 1') according to claim 5, wherein the inflation channel (11) extends through only one of the two half-rims (20b).

7. A wheel (1') according to any preceding claim, including a protective ring (30) fastened coaxially to the rim via fastener means (13, 25), the protective ring being arranged in such a manner that the inflation valve (10) extends inside a volume defined by the rim and by said ring.

8. A wheel (1') according to claim 7, wherein the fastener means comprise lugs (25) projecting axially from the periphery of the rim, the protective ring being bolted to the lugs.

9. A wheel (1') according to claim 7 or claim 8, wherein the protective ring (30) comprises a plurality of pieces that are generally circularly arcuate in shape.

10. A wheel (1') according to any one of claims 7 to 9, wherein the protective ring (30) leaves empty space around the inflation valve (10).

11. Aircraft landing gear including at least one wheel (1, 1') according to any preceding claim.

12. An aircraft including landing gear according to claim 11.
